(19) Europäisches Patentamt
European Patent Office
Office européen des brevets

(11) EP 3 722 360 B1

(12) **EUROPEAN PATENT SPECIFICATION**

(45) Date of publication and mention of the grant of the patent:
**19.10.2022 Bulletin 2022/42**

(21) Application number: **18885433.5**

(22) Date of filing: **30.11.2018**

(51) International Patent Classification (IPC):
***C08L 21/00*** *(2006.01)* ***B60C 1/00*** *(2006.01)*
***B60C 15/06*** *(2006.01)* ***C08K 3/04*** *(2006.01)*
***C08K 3/36*** *(2006.01)* ***C08K 5/25*** *(2006.01)*
***C08K 5/39*** *(2006.01)* ***C08K 5/44*** *(2006.01)*
***C08K 5/24*** *(2006.01)* ***C08K 5/30*** *(2006.01)*
***C08K 5/40*** *(2006.01)* ***C08L 7/00*** *(2006.01)*
***C08K 5/00*** *(2006.01)*

(52) Cooperative Patent Classification (CPC):
(C-Sets available)
**C08L 7/00; B60C 1/00; B60C 15/0607; C08K 3/04; C08K 3/36; C08K 5/25; C08K 5/40; C08L 21/00;**
B60C 2001/005; B60C 2001/0058;
B60C 2015/0621; B60C 2200/06; C08K 5/0025

(Cont.)

(86) International application number:
**PCT/JP2018/044215**

(87) International publication number:
**WO 2019/111818 (13.06.2019 Gazette 2019/24)**

(54) **TIRE RUBBER COMPOSITION AND TIRE**

REIFENKAUTSCHUKZUSAMMENSETZUNG UND REIFEN

COMPOSITION DE CAOUTCHOUC POUR PNEUS ET PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.12.2017 JP 2017234579**

(43) Date of publication of application:
**14.10.2020 Bulletin 2020/42**

(73) Proprietor: **Bridgestone Corporation**
**Tokyo 104-8340 (JP)**

(72) Inventor: **MIYAZAKI, Yoshinori**
**Tokyo 104-8340 (JP)**

(74) Representative: **Lang, Johannes**
**Bardehle Pagenberg Partnerschaft mbB**
**Patentanwälte, Rechtsanwälte**
**Prinzregentenplatz 7**
**81675 München (DE)**

(56) References cited:
**EP-A1- 2 206 730**
**EP-A1- 2 977 401**
**WO-A1-2014/148453**
**WO-A1-2016/208302**
**JP-A- H11 292 834**
**JP-A- 2002 069 236**
**JP-A- 2007 023 070**
**JP-A- 2009 113 794**
**JP-A- 2009 221 262**
**JP-A- 2016 166 321**
**US-A1- 2016 040 024**
**US-A1- 2016 122 519**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08K 3/04, C08L 7/00;**
**C08K 3/36, C08L 7/00;**
**C08K 5/25, C08L 7/00;**
**C08K 5/40, C08L 7/00**

## Description

### Technical Field

The present invention relates to a tire rubber composition and a tire.

### Background Art

A pneumatic tire for a large vehicle and a heavy load is demanded to have an enhanced abrasion resistance without impairing the low heat generation property, from the standpoint of the low fuel consumption property and the lifetime of the tire, and furthermore the fracture resistance, such as the crack propagation resistance, thereof is also important characteristics.

For these issues, for example, PTL 1 proposes, for providing a rubber composition for a heavy load tire tread having an improved pitching resistance without impairing the heat generation property, a rubber composition for a heavy load tire tread containing (i) 100 parts by weight of vulcanizable rubber mainly containing natural rubber/synthetic polyisoprene rubber, (ii) 40 to 60 parts by weight in total of carbon black having a nitrogen adsorption specific surface area ($N_2SA$) of 90 $m^2/g$ or more, and depending on necessity, silica, (iii) 0.5 to 5.0 parts by weight of at least one kind of a resin (a) selected from gum rosin, modified gum rosin, C5, and dicyclopentadiene (DCPD), and (iv) 0.1 to 10 parts by weight of a cyclic polysulfide compound (b) having a particular structure, in which the mixing amounts (parts by weight per 100 parts by weight of the rubber) of the resin (a) and the cyclic polysulfide compound (b) satisfy the expression 1 (a+b = 1.0 to 10) and the expression 2 (b/a = 0.1 to 10).

Furthermore, for example, PTL 2 proposes, for providing a rubber composition having a high elasticity and a high tensile strength excellent in the heat generation property and the fatigue property, a rubber composition containing 100 parts by weight of vulcanizable rubber (A), 0.1 to 50 parts by weight of a polyamide elastomer (B) having a melting point of 100 to 180°C, and 1 to 100 parts by weight of an inorganic reinforcing material (C).

### Citation List

### Patent Literatures

PTL 1: JP 2005-225909 A
PTL 2: JP 2014-062259 A

### Summary of Invention

### Technical Problem

A method for enhancing the crack resistance of a tire includes a method of increasing the amount of carbon black contained in the tire rubber composition, and a method of decreasing the particle diameter of the carbon black, but the methods contradict the low heat generation property. Therefore, the methods described in PTLs 1 and 2 cannot provide a tire that is excellent in balance between the low heat generation property and the crack resistance.

In view of the aforementioned circumstances, an object of the present invention is to provide a tire rubber composition that is capable of producing a tire that is excellent in balance between the low heat generation property and the crack resistance, and a tire that is excellent in balance between the low heat generation property and the crack resistance, and a problem thereof is to achieve the object.

### Solution to Problem

<1> A tire rubber composition containing a rubber component (A), at least one compound (B) selected from the group consisting of a compound represented by the following formula (I) and a compound represented by the following formula (II), a vulcanization accelerator (C) containing two or more kinds of vulcanization accelerators including a thiuram-based vulcanization accelerator, and a filler (D):

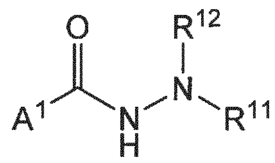

(I)

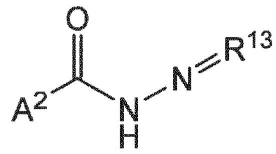

(II)

wherein

in the formula (I), $A^1$ represents an aryl group having at least two polar groups, in which the polar groups may be the same as or different from each other, and $R^{11}$ and $R^{12}$ each independently represent a hydrogen atom, an acyl group, an amide group, an alkyl group, a cycloalkyl group, or an aryl group, and

in the formula (II), $A^2$ represents an aryl group having 6 to 15 carbon atoms having at least two polar groups, in which the polar groups may be the same as or different from each other, and $R^{13}$ represents a divalent saturated or unsaturated aliphatic group having 1 to 30 carbon atoms, a cycloalkylene group having 5 to 10 carbon atoms, or an arylene group having 5 to 10 carbon atoms.

<2> The tire rubber composition according to the item <1>, wherein at least one of the polar groups of $A^1$ and at least one of the polar groups of $A^2$ each independently are a hydroxy group, an amino group, or a nitro group.
<3> The tire rubber composition according to the item <1> or <2>, wherein at least one of the polar groups of $A^1$ and at least one of the polar groups of $A^2$ each are a hydroxy group.
<4> The tire rubber composition according to any one of the items <1> to <3>, wherein at least two of the polar groups of $A^1$ and at least two of the polar groups of $A^2$ each are hydroxy groups.
<5> The tire rubber composition according to any one of the items <1> to <4>, wherein $A^1$ and $A^2$ each independently represent a phenyl group or a naphthyl group.
<6> The rubber composition according to any one of the items <1> to <5>, wherein $R^{11}$ and $R^{12}$ all represent hydrogen atoms.
<7> The tire rubber composition according to any one of the items <1> to <6>, wherein the compound (B) has a molecular weight of 200 or less.
<8> The tire rubber composition according to any one of the items <1> to <7>, wherein the compound (B) has a melting point of 80°C or more and less than 250°C.
<9> The tire rubber composition according to any one of the items <1> to <8>, wherein the tire rubber composition has a content of the compound (B) of 0.1 part by mass or more and 2 parts by mass or less per 100 parts by mass of the rubber component (A).
<10> The tire rubber composition according to any one of the items <1> to <9>, wherein the vulcanization accelerator (C) contains a sulfenamide-based vulcanization accelerator.
<11> The tire rubber composition according to any one of the items <1> to <10>, wherein the filler (D) contains at least one selected from the group consisting of carbon black and silica.
<12> The tire rubber composition according to any one of the items <1> to <11>, wherein the tire rubber composition has a content of the thiuram-based vulcanization accelerator of 2.0 parts by mass or less per 100 parts by mass of the rubber component (A).
<13> The tire rubber composition according to any one of the items <1> to <12>, wherein the filler (D) contains silica, and the tire rubber composition has a content of the silica of 20 parts by mass or less per 100 parts by mass of the rubber component (A).
<14> A tire, which is produced from the tire rubber composition according to any one of the items <1> to <13>.
<15> The tire according to the item <14>, including pad rubber produced from the tire rubber composition according to any one of the items <1> to <13>.

Advantageous Effects of Invention

According to the present invention, a tire rubber composition that is capable of producing a tire that is excellent in balance between the low heat generation property and the crack resistance, and a tire that is excellent in balance

between the low heat generation property and the crack resistance can be provided.

Brief Description of Drawing

Fig. 1 is one example of the cross sectional view in the width direction of the tire of the present invention.

Description of Embodiments

<Rubber Composition>

The tire rubber composition of the present invention contains a rubber component (A), at least one compound (B) selected from the group consisting of a compound represented by the following formula (I) and a compound represented by the following formula (II), a vulcanization accelerator (C) containing two or more kinds of vulcanization accelerators including a thiuram-based vulcanization accelerator, and a filler (D).
The tire rubber composition may be referred simply to as a rubber composition in some cases.

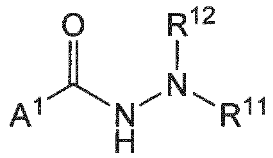

(I)

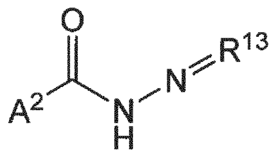

(II)

In the formula (I), $A^1$ represents an aryl group having at least two polar groups, in which the polar groups may be the same as or different from each other, and $R^{11}$ and $R^{12}$ each independently represent a hydrogen atom, an acyl group, an amide group, an alkyl group, a cycloalkyl group, or an aryl group.
In the formula (II), $A^2$ represents an aryl group having 6 to 15 carbon atoms having at least two polar groups, in which the polar groups may be the same as or different from each other, and $R^{13}$ represents a divalent saturated or unsaturated aliphatic group having 1 to 30 carbon atoms, a cycloalkylene group having 5 to 10 carbon atoms, or an arylene group having 5 to 10 carbon atoms.
The mechanism for the capability of the production of a tire that is excellent in balance between the low heat generation property and the crack resistance by the tire rubber composition of the present invention having the aforementioned constitution may not be clear, and the mechanism can be estimated as follows. The aryl group or the aromatic ring having two or more polar groups represented by $A^1$ and $A^2$ in the compound (B) has high affinity with the filler (D), and simultaneously the moiety having a hydrazide skeleton in the formula (I) or the moiety having a hydrazone skeleton in the formula (II) has high affinity with the rubber component (A). Accordingly, the compound (B) mixed in the rubber composition can largely enhance the chemical interaction between the rubber component (A) and the filler (D). It is considered that the hysteresis caused by friction among the filler (D) can be decreased thereby, and as a result, an excellent low heat generation property can be obtained as compared to the ordinary products. In addition, it is considered that the enhancement of the dispersibility of the filler (D) in the rubber composition can enhance the reinforcing capability of the vulcanized rubber.
Furthermore, it is considered that the use of the thiuram-based vulcanization accelerator, which is a vulcanization accelerator having excellent heat resistance, and a vulcanization accelerator other than the thiuram-based vulcanization accelerator can largely enhance the modulus of the vulcanized rubber, providing excellent crack resistance.
Consequently, it is considered that a tire obtained with the tire rubber composition of the present invention is excellent in balance between the low heat generation property and the crack resistance.
The tire rubber composition and the tire of the present invention will be described in detail below.

[Rubber Component (A)]

The tire rubber composition of the present invention contains the rubber component (A).
Examples of the rubber component (A) include at least one kind of diene rubber selected from the group

consisting of natural rubber (NR) and synthetic diene rubber. The rubber component may be modified.

Specific examples of the synthetic diene rubber include polyisoprene rubber (IR), polybutadiene rubber (BR), styrene-butadiene copolymer rubber (SBR), butadiene-isoprene copolymer rubber (BIR), styrene-isoprene copolymer rubber (SIR), styrene-butadiene-isoprene copolymer rubber (SBIR), and modified rubber thereof.

The diene rubber is preferably natural rubber, polyisoprene rubber, styrene-butadiene copolymer rubber, polybutadiene rubber, isobutylene-isoprene rubber, or modified rubber thereof, more preferably natural rubber or polybutadiene rubber, and further preferably natural rubber, from the standpoint of the affinity with the compound (B).

The diene rubber may be used alone or as a blend of two or more kinds thereof.

The rubber component preferably contains natural rubber in an amount of 55% by mass or more, more preferably 65% by mass or more, and further preferably 75% by mass or more, from the standpoint of the enhancement of the affinity with the compound (B) and the enhancement of the low heat generation property and the crack resistance of the resulting tire. The upper limit of the proportion of natural rubber in the rubber component is 100% by mass.

The rubber component may contain, as far as the effects of the present invention are not impaired.

[Compound (B)]

The rubber composition of the present invention contains at least one compound (B) selected from the group consisting of a compound represented by the formula (I) and a compound represented by the formula (II).

The compound (B) contained in the rubber composition of the present invention provides the coupling effect between the rubber component (A) and the filler (D) with high efficiency, and can enhance the dispersibility of the filler (D) in the rubber composition. A tire having the filler (D) with the enhanced dispersibility has an excellent low heat generation property, and has an excellent crack resistance.

[Compound represented by Formula (I)]

The compound represented by the formula (I) is a carboxylic acid hydrazide compound and has the following structure.

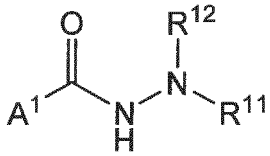

(I)

In the formula (I), $A^1$ represents an aryl group having at least two polar groups, in which the polar groups may be the same as or different from each other. $R^{11}$ and $R^{12}$ each independently represent a hydrogen atom, an acyl group, an amide group (-$CONH_2$), an alkyl group, a cycloalkyl group, or an aryl group.

The compound represented by the formula (I) mixed in the rubber composition can largely enhance the chemical interaction between the rubber component (A) and the filler (D) since the aryl group represented by $A^1$ has high affinity with the filler (D), such as carbon black, and the moiety having the hydrazide skeleton thereof has high affinity with the rubber component (A). The hysteresis caused by friction among the filler (D) can be decreased thereby, and as a result, an excellent low heat generation property can be obtained as compared to the ordinary products, resulting in the low heat generation property. In addition, the enhancement of the dispersibility of the filler (D) can achieve the excellent reinforcing capability.

Furthermore, as a result of the large enhancement of the chemical interaction between the rubber component (A) and the filler (D), the scorch property is enhanced (i.e., the scorch time is prolonged) while retaining the low heat generation property of the vulcanized rubber, and thus the workability can also be enhanced.

The formula (I) will be described below.

In the formula (I), $A^1$ represents an aryl group. The aryl group has at least two polar group at arbitrary positions, in which the polar groups may be the same as or different from each other, and the positions of the polar groups are not limited in the aromatic ring of the aryl group. The aryl group has at least two polar groups, and thereby the high affinity with the filler (D), such as carbon black, can be obtained.

The aryl group preferably has 6 to 20 carbon atoms, more preferably 6 to 14 carbon atoms, and further preferably 6 to 10 carbon atoms. Specific examples of the aryl group include a phenyl group, a naphthyl group, an anthryl group, a phenanthryl group, and triphenylenyl group. Among these, the aryl group is preferably a phenyl group or a naphthyl group, and more preferably a phenyl group, since the affinity with the filler (D) is further enhanced, the resulting vulcanized rubber has excellent low heat generation property, the number of aromatic rings can be decreased, and an advantage

in cost and excellent practicality are obtained.

The kind of the polar group of the aryl group is not particularly limited, and examples thereof include an amino group, a nitrile group, an ammonium group, an amide group (-$CONH_2$), a hydrazo group (-NH-NH-R, wherein R represents an alkyl group or an aryl group), an azo group (-N=N-R, wherein R represents an alkyl group or an aryl group), a hydroxy group, a carboxy group, a acyl group (-CO-R, wherein R represents an alkyl group or an aryl group), an epoxy group, an oxycarbonyl group (-CO-O-R, wherein R represents an alkyl group or an aryl group), an alkoxysilyl group, an alkylamino group, and a nitro group.

The alkyl group of a hydrazo group, an azo group, a carbonyl group, an oxycarbonyl group, an alkoxysilyl group, and an alkylamino group is preferably a linear or branched alkyl group having 1 to 6 carbon atoms. Specific examples thereof include a methyl group, an ethyl group, a propyl group, an isopropyl group, a n-butyl group, a tert-butyl group, and a n-hexyl group.

The aryl group of a hydrazo group, an azo group, a carbonyl group, and an oxycarbonyl group preferably has 6 to 10 carbon atoms. Specific examples thereof include a phenyl group and a naphthyl group.

Among these, the polar group is preferably a hydroxy group, an amino group, or a nitro group, and more preferably a hydroxy group, and it is further preferred that at least one thereof is a hydroxy group, and it is particularly preferred that at least two thereof are hydroxy groups, since the affinity with the filler (D) can be further enhanced, and the balance between the low heat generation property and the crack resistance of the vulcanized rubber can be further enhanced. The number of the polar groups of the aryl group is preferably two.

In the formula (I), $R^{11}$ and $R^{12}$ each independently represent a hydrogen atom, an acyl group (-CO-R, wherein R represents an alkyl group or an aryl group), an amide group (-$CONH_2$), an alkyl group, a cycloalkyl group, or an aryl group.

The alkyl group represented by $R^{11}$ and $R^{12}$, and the alkyl group of an acyl group each preferably have 1 to 6 carbon atoms and may be either linear or branched. Specific examples thereof include a methyl group, an ethyl group, a propyl group, an isopropyl group, a n-butyl group, a tert-butyl group, and a n-hexyl group.

The cycloalkyl group preferably has 5 to 10 carbon atoms, and specific examples thereof include a cycloheptyl group, a cyclohexyl group, a cyclooctyl group, and a cyclodecanyl group.

The aryl group represented by $R^{11}$ and $R^{12}$, and the aryl group of an acyl group each preferably have 6 to 10 carbon atoms, and specific examples thereof include a phenyl group and a naphthyl group.

Among these, it is preferred that $R^{11}$ and $R^{12}$ each represent a hydrogen atom or an alkyl group, and it is more preferred that both $R^{11}$ and $R^{12}$ represent hydrogen atoms, from the standpoint of the high affinity with the rubber component (A), the excellent workability, and the excellent balance between the low heat generation property and the crack resistance of the vulcanized rubber.

Examples of the compound represented by the formula (I) include compounds represented by the following formulae (I-1) to (I-6), but are not limited thereto.

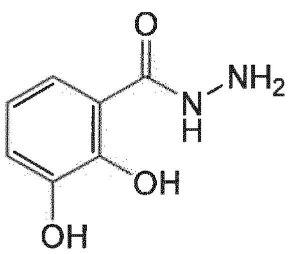
(I-1)

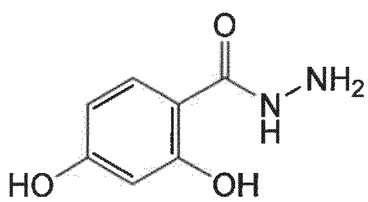
(I-2)

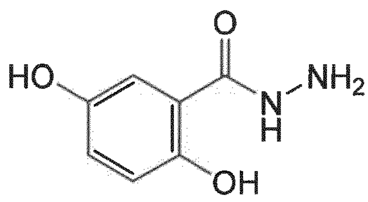
(I-3)

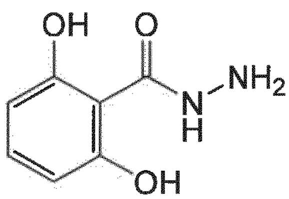
(I-4)

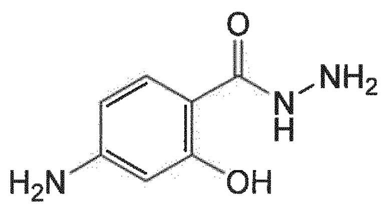
(I-5)

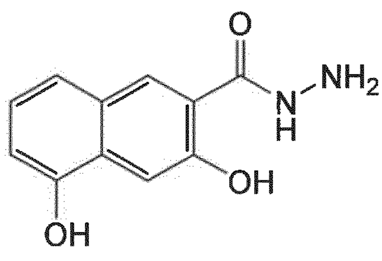
(I-6)

The molecular weight of the compound represented by the formula (I) is preferably 200 or less, and more

preferably 180 or less. It is because the affinity with the molecules of the rubber component (A) can be enhanced, the further excellent low heat generation property can be obtained, and the crack resistance can also be enhanced.

The melting point of the compound represented by the formula (I) is preferably 80°C or more and less than 250°C, and more preferably 80 to 200°C. The reason is that the affinity with the molecules of the rubber component (A) can be enhanced, the further excellent low heat generation property can be obtained, and the crack resistance can also be enhanced, by decreasing the melting point of the compound represented by the formula (I).

The compound represented by the formula (II) will be described below.

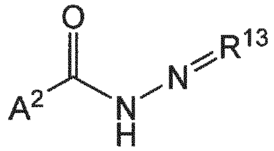

(II)

In the formula (II), $A^2$ represents an aryl group having 6 to 15 carbon atoms having at least two polar groups, in which the polar groups may be the same as or different from each other. $R^{13}$ represents a divalent saturated or unsaturated aliphatic group having 1 to 30 carbon atoms, a cycloalkylene group having 5 to 10 carbon atoms, or an arylene group having 5 to 10 carbon atoms.

The formula (II) will be described below.

The compound represented by the formula (II) mixed in the rubber composition can largely enhance the chemical interaction between the rubber component (A) and the filler (D), such as carbon black, since the aryl group represented by $A^2$ having 6 to 15 carbon atoms having at least two polar groups has high affinity with the filler (D), such as carbon black, and the moiety having the hydrazone skeleton thereof has high affinity with the rubber component. The hysteresis caused by friction among the filler (D) can be decreased thereby, and as a result, an excellent low heat generation property can be obtained as compared to the ordinary products. In addition, the enhancement of the dispersibility of the filler (D) can achieve the excellent reinforcing capability.

Furthermore, as a result of the large enhancement of the chemical interaction between the rubber component (A) and the filler (D), the scorch property is enhanced (i.e., the scorch time is prolonged) while retaining the balance between the low heat generation property and the crack resistance of the vulcanized rubber, and thus the workability can also be enhanced.

The number of the polar groups of the aryl group represented by $A^2$ in the formula (II) is two or more. The two or more polar groups in the aromatic ring can provide high affinity with the filler (D), such as carbon black, and in the case where the number thereof is less than two, sufficient affinity with the filler (D) may not be obtained, and the balance between the low heat generation property and the crack resistance of the vulcanized rubber may be deteriorated. The number of the polar groups of the aryl group is preferably two.

Examples of the polar group of the aryl group represented by $A^2$ include the same ones as for the polar group of the aryl group represented by $A^1$ in the formula (I).

Among these, the polar group preferably includes a hydroxy group or an amino group, and more preferably includes a hydroxy group, since the affinity with the filler (D) can be further enhanced, and the balance between the low heat generation property and the crack resistance of the vulcanized rubber can be further enhanced.

The aryl group represented by $A^2$ is an aryl group having 6 to 15 carbon atoms. The aryl group may have a monocyclic structure containing only one aromatic ring, such as a phenyl group, or may have a condensed ring structure containing two or three or more aromatic rings condensed to each other, such as a naphthyl group, an anthryl group, and a phenanthryl group. The number of carbon atoms thereof is preferably 6 to 10, and a phenyl group and a naphthyl group are preferred.

The divalent saturated or unsaturated aliphatic group having 1 to 30 carbon atoms represented by $R^{13}$ may be either linear or branched. In the case where $R^{13}$ represents a divalent saturated or unsaturated aliphatic group having 1 to 30 carbon atoms, the compound represented by the formula (II) is preferably represented by the following formula (III).

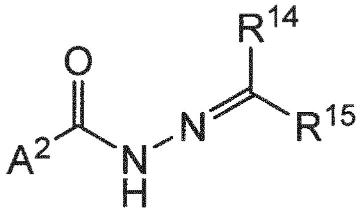

(III)

In the formula (III), $A^2$ has the same meaning as $A^2$ in the formula (II), and the preferred embodiment thereof

is also the same. $R^{14}$ and $R^{15}$ each independently represent a hydrogen atom or a saturated or unsaturated aliphatic group, provided that the total of the number of carbon atoms of $R^{14}$ and the number of carbon atoms of $R^{15}$ is 0 to 29.

The saturated or unsaturated aliphatic groups represented by $R^{14}$ and $R^{15}$ each independently may be either linear or branched. The aliphatic groups each preferably have 1 to 12 carbon atoms (provided that the total of the numbers of carbon atoms is 29 or less), more preferably 1 to 8 carbon atoms, and further preferably 1 to 5 carbon atoms.

Specific examples of the cycloalkylene group having 5 to 10 carbon atoms represented by $R^{13}$ include a cycloheptylene group, a cyclohexylene group, a cyclooctylene group, and a cyclodecanylene group.

Specific examples of the arylene group having 5 to 10 carbon atoms represented by $R^{13}$ include a cyclopentadienyl group.

Among these, $R^{13}$ preferably represents a divalent saturated or unsaturated aliphatic group having 1 to 30 carbon atoms.

Examples of the compound represented by the formula (II) include compounds represented by the following formulae (II-1) to (II-9), but are not limited thereto.

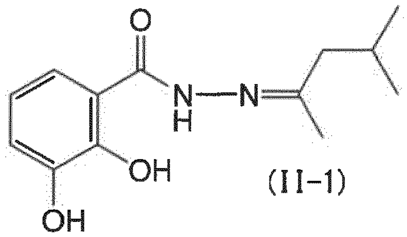

(II-1)

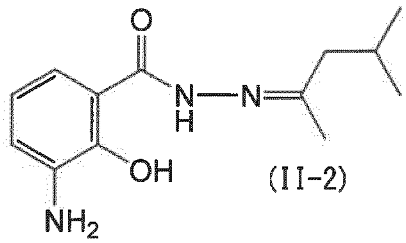

(II-2)

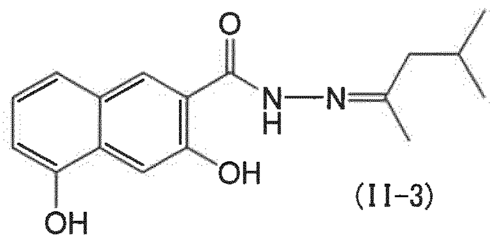

(II-3)

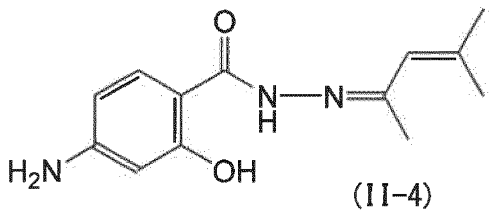

(II-4)

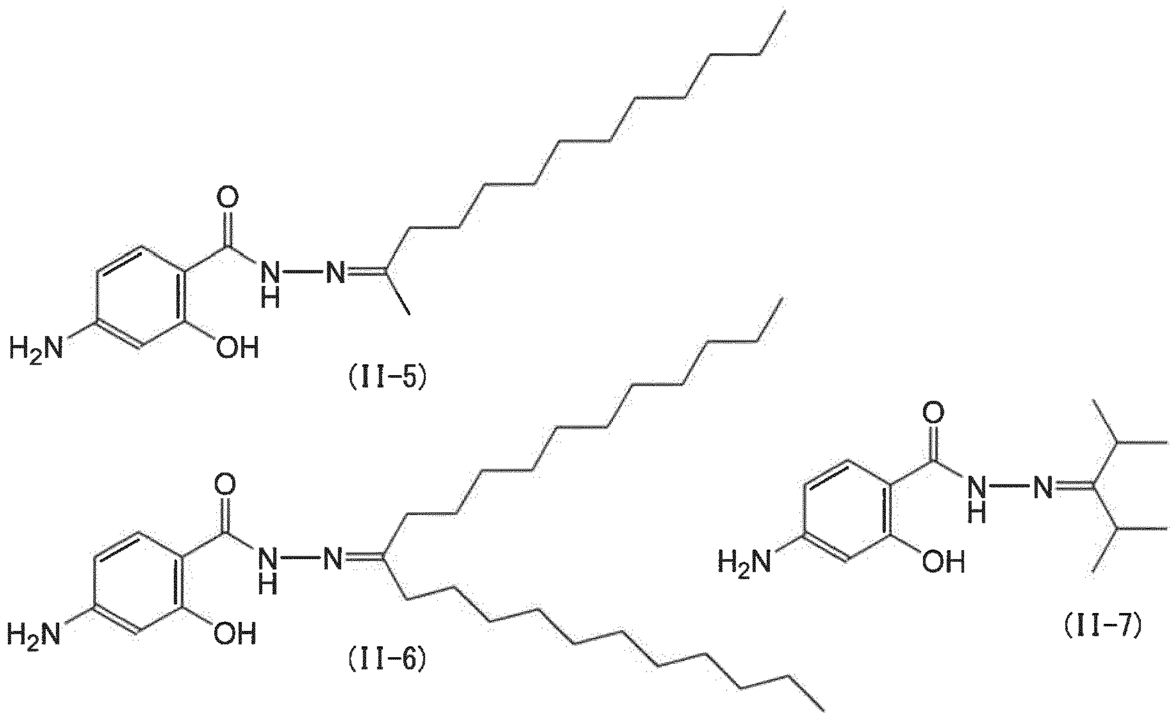

(II-5)

(II-6)

(II-7)

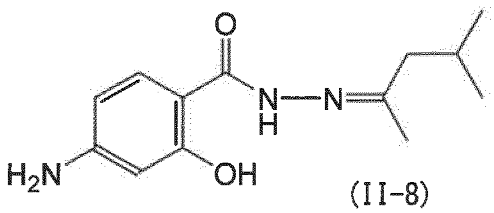
(II-8)

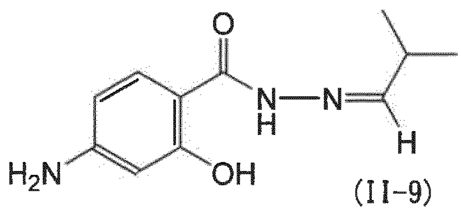
(II-9)

The molecular weight of the compound represented by the formula (II) is preferably 200 or less, and more preferably 180 or less. It is because the affinity with the molecules of the rubber component (A) can be enhanced, the further excellent low heat generation property can be obtained, and the abrasion resistance can also be enhanced.
The melting point of the compound represented by the formula (II) is preferably 80°C or more and less than 250°C, and more preferably 80 to 200°C. The reason is that the affinity with the molecules of the rubber component (A) can be enhanced, the further excellent low heat generation property can be obtained, and the crack resistance can also be enhanced, by decreasing the melting point of the compound represented by the formula (II).
In the tire rubber composition of the present invention, the content of the compound (B) is not particularly limited, and is preferably 0.1 part by mass or more and 2 parts by mass or less, more preferably 0.1 part by mass or more and 1.5 parts by mass or less, and particularly preferably 0.1 part by mass or more and 1 part by mass or less, per 100 parts by mass of the rubber component (A), from the standpoint of the enhancement of the crack resistance of the tire, and the enhancement of the low heat generation property thereof. In the case where the content of the compound (B) in the rubber composition is 0.1 part by mass or more per 100 parts by mass of the rubber component (A), the sufficient dispersion effect of the filler (D) can be obtained to provide the further excellent crack resistance and low heat generation property, and the excellent workability of the rubber composition can be obtained. In the case where the content of the compound (B) in the rubber composition is 2 parts by mass or less per 100 parts by mass of the rubber component (A), the workability of the rubber composition can be prevented from being impaired, and the properties of the tire, such as the strength, can be prevented from being lowered.

[Vulcanization Accelerator (C)]

The tire rubber composition of the present invention contains a vulcanization accelerator (C) containing two or more kinds of vulcanization accelerators including a thiuram-based vulcanization accelerator.
In other words, the vulcanization accelerator (C) contains at least a thiuram-based vulcanization accelerator, and two or more kinds of vulcanization accelerators including the thiuram-based vulcanization accelerator.

(Thiuram-based Vulcanization Accelerator)

Even in the case where the amount of the rubber composition to be vulcanized is large, which may prolong the vulcanization time, the thiuram-based vulcanization accelerator contained in the rubber composition of the present invention prevents the effect thereof from being impaired by the vulcanization heat, and has excellent heat resistance, thereby providing a tire having excellent low heat generation property.
Examples of the thiuram-based vulcanization accelerator include tetramethylthiuram monosulfide (TS), tetramethylthiuram disulfide (TT), tetraethylthiuram disulfide (TET), dipentamethylenethiuram hexasulfide (TRA), tetrabutylthiuram disulfide (TBT), tetrakis(2-ethylhexyl)thiuram disulfide (TOT), and tetrabenzylthiuram disulfide (TBZTD), and among these, tetrakis(2-ethylhexyl)thiuram disulfide (TOT) and tetrabenzylthiuram disulfide (TBZTD) are preferred, and tetrakis(2-ethylhexyl)thiuram disulfide (TOT) is more preferred.
The tire rubber composition of the present invention contains one or more kind of a vulcanization accelerator other than the thiuram-based vulcanization accelerator for further accelerating the vulcanization of the rubber component (A).
Specific examples thereof include vulcanization accelerators of a guanidine series, an aldehyde-amine series, an aldehyde-ammonia series, a thiazole series, a sulfenamide series, a thiourea series, a dithiocarbamate series, and a xanthate series. The vulcanization accelerator other than the thiuram-based vulcanization accelerator may be used alone or as a combination of two or more kinds thereof.
Among these, a sulfenamide-based vulcanization accelerator is preferably contained from the standpoint of the retention of the modulus of the tire.

(Sulfenamide-based Vulcanization Accelerator)

Examples of the sulfenamide-based vulcanization accelerator include N-cyclohexyl-2-benzothiazolyl sulfenamide, N,N-dicyclohexyl-2-benzothiazolyl sulfenamide, N-tert-butyl-2-benzothiazolyl sulfenamide, N-oxyethylene-2-benzothiazolyl sulfenamide, N-methyl-2-benzothiazolyl sulfenamide, N-ethyl-2-benzothiazolyl sulfenamide, N-propyl-2-benzothiazolyl sulfenamide, N-butyl-2-benzothiazolyl sulfenamide, N-pentyl-2-benzothiazolyl sulfenamide, N-hexyl-2-benzothiazolyl sulfenamide, N-heptyl-2-benzothiazolyl sulfenamide, N-octyl-2-benzothiazolyl sulfenamide, N-2-ethylhexyl-2-benzothiazolyl sulfenamide, N-decyl-2-benzothiazolyl sulfenamide, N-dodecyl-2-benzothiazolyl sulfenamide, N-stearyl-2-benzothiazolyl sulfenamide, N,N-dimethyl-2-benzothiazolyl sulfenamide, N,N-diethyl-2-benzothiazolyl sulfenamide, N,N-dipropyl-2-benzothiazolyl sulfenamide, N,N-dibutyl-2-benzothiazolyl sulfenamide, N,N-dipentyl-2-benzothiazolyl sulfenamide, N,N-dihexyl-2-benzothiazolyl sulfenamide, N,N-diheptyl-2-benzothiazolyl sulfenamide, N,N-dioctyl-2-benzothiazolyl sulfenamide, N,N-di-2-ethylhexylbenzothiazolyl sulfenamide, N,N-didecyl-2-benzothiazolyl sulfenamide, N,N-didodecyl-2-benzothiazolyl sulfenamide, and N,N-distearyl-2-benzothiazolyl sulfenamide.

Among these, N-cyclohexyl-2-benzothiazolyl sulfenamide and N-tert-butyl-2-benzothiazolyl sulfenamide are preferred from the standpoint of the reactivity.

Examples of the guanidine vulcanization accelerator include 1,3-diphenylguanidine, and examples of the dithiocarbamate vulcanization accelerator include zinc dibenzyldithiocarbamate.

The content of the thiuram-based vulcanization accelerator in the rubber composition is preferably 0.05 part by mass or more, and more preferably 0.1 part by mass or more, and is preferably 2.0 parts by mass or less, more preferably 1.5 parts by mass or less, and further preferably 1.0 part by mass or less, per 100 parts by mass of the rubber component (A), from the standpoint of the enhancement of the low heat generation property and the crack resistance of the tire.

The content of the vulcanization accelerator (C) in the rubber composition is preferably 0.8 part by mass or more, and more preferably 0.9 part by mass or more, and is preferably 2.8 parts by mass or less, more preferably 2.5 parts by mass or less, and further preferably 2.3 parts by mass or less, per 100 parts by mass of the rubber component (A), from the standpoint of the enhancement of the low heat generation property and the crack resistance of the tire.

The content of the vulcanization accelerator other than the thiuram-based vulcanization accelerator is the difference between the content of the vulcanization accelerator (C) and the content of the vulcanization accelerator other than the thiuram-based vulcanization accelerator.

[Filler (D)]

The tire rubber composition of the present invention contains a filler (D).

The filler (D) contained in the rubber composition can enhance the reinforcing capability of the tire rubber composition of the present invention.

The kind of the filler (D) is not particularly limited, and for example, a reinforcing filler for reinforcing a rubber composition may be used. Examples of the reinforcing filler include silica and carbon black. The filler (D) preferably contains at least one selected from the group consisting of carbon black and silica. Specifically, any one of silica and carbon black may be used alone, and both silica and carbon black may be used.

(Silica)

The silica is not particularly limited, and ordinary grade silica, special silica subjected to a surface treatment with a silane coupling agent or the like, and the like may be used depending on purposes. The silica used is preferably, for example, wet method silica.

(Carbon Black)

The carbon black is not particularly limited, and may be appropriately selected depending on purposes. The carbon black is preferably FEF, SRF, HAF, ISAF, and SAF grades, and more preferably HAF, ISAF, and SAF grades.

In the tire rubber composition of the present invention, the content of the filler (D) is preferably 10 to 100 parts by mass, and more preferably 30 to 80 parts by mass, per 100 parts by mass of the rubber component.

In the case where the content of the filler (D) in the rubber composition is 10 parts by mass or more per 100 parts by mass of the rubber component, the excellent crack resistance is obtained without impairing the strength of the resulting tire, and in the case where the content thereof is 100 parts by mass or less, the hysteresis caused by friction among the filler (D) can be decreased.

The compound (B) has affinity with both silica and carbon black, and particularly has excellent affinity with carbon black, and therefore the filler (D) preferably contains at least carbon black.

Silica contained decreases the heat generation property, and therefore the rubber composition that contains silica (i.e., the content of silica in the rubber composition that exceeds 0 part by mass per 100 parts by mass of the rubber component (A)) is also a preferred embodiment. The silica is preferably 20 parts by mass or less, more preferably

15 parts by mass or less, and further preferably 10 parts by mass or less, per 100 parts by mass of the rubber component (A).

The ratio (cb/si) of the mass (si) of the silica and the mass (cb) of the carbon black in the filler (D) is preferably 100/0 to 40/60, more preferably 100/0 to 50/50, further preferably 100/0 to 51/49, and still further preferably 95/5 to 60/40.

[Vulcanizing Agent]

The tire rubber composition of the present invention preferably contains a vulcanizing agent.

The vulcanizing agent is not particularly limited, and sulfur is generally used, examples of which include powdered sulfur, precipitated sulfur, colloidal sulfur, surface-treated sulfur, and insoluble sulfur.

In the tire rubber composition of the present invention, the content of the vulcanizing agent is preferably 0.1 to 10 parts by mass per 100 parts by mass of the rubber component. In the case where the content is 0.1 part by mass or more, the vulcanization can be sufficiently performed, and in the case where the content is 10 parts by mass or less, the aging of the vulcanized rubber can be suppressed.

The content of the vulcanizing agent in the rubber composition is more preferably 0.5 to 8 parts by mass, and further preferably 0.7 to 4 parts by mass, per 100 parts by mass of the rubber component.

The tire rubber composition of the present invention may contain, in addition to the rubber component (A), the compound (B), the vulcanization accelerator (C), and the filler (D), compounding ingredients that are generally used in the field of rubber industries, such as a vulcanizing agent, a softener, stearic acid, an antiaging agent, and zinc oxide after appropriate selection thereof in such a range that does not impair the object of the present invention.

<Tire>

The tire of the present invention is one produced from the tire rubber composition of the present invention.

The tire of the present invention is excellent in balance between the low heat generation property and the crack resistance due to the use of the tire rubber composition of the present invention therein. In particular, the tire rubber composition is suitable for the production of a heavy load tire, such as a tire for trucks and buses, which uses a larger amount of the rubber composition and receives a larger load than a tire for passenger vehicles, and is particularly suitable for the production of a heavy load tire for off-the-road.

The tire rubber composition of the present invention in any portion of the tire, such as the tread and the sidewall, and is preferably used in the pad rubber in the vicinity of the carcass ply cord, which often causes stress and heat generation due to the upthrust force from the rim flange.

One example of the tire including pad rubber produced from the tire rubber composition of the present invention will be described with reference to Fig. 1.

Fig. 1 is one example of the cross sectional view in the width direction of the tire of the present invention.

The tire 1 of the present invention shown in Fig. 1 has a tread 2, one pair of side walls 3 connecting therefrom, and one pair of beads 4, and is in the state where the tire is mounted on a rim 7.

These portions have a carcass 5 installed between the embedded bead 4 and the other bead 4, which is not shown in the figure, and a belt 6 formed of plural steel cords reinforcing the side wall 3 outside the carcass 5. The carcass 5 is folded around the bead 4 from the inside to the outside, and extended outside in the circumferential direction of the tire, so as to form a folded carcass (ply cord) 5a. The carcass 5 and the belt 6 form a carcass ply layer and a belt ply layer by covering the metal reinforcing members, such as the steel cords, with covering rubber. Pad rubber 9a and pad rubber 9b are formed of the tire rubber composition of the present invention, and are disposed adjacently outside and inside respectively the folded carcass 5a turning around the bead 4. The pad rubber 9b is disposed between the carcass 5 and the carcass 5 (one of which is the folded carcass 5a) and above the stiffener 8. The pad rubber 9a and the pad rubber 9b each are disposed over the upper end thereof at the half height of the tire or lower and the lower end thereof above the upper end of the bead 4.

The production method of the tire of the present invention is not particularly limited, and the tire may be produced by an ordinary method.

A tire including pad rubber produced from the tire rubber composition of the present invention can be produced, for example, in the following manner.

The rubber component (A), the compound (B), the vulcanization accelerator (C), the filler (D), and the components that are used depending on necessity are kneaded with a kneading device, such as a roll and an internal mixer, to prepare a rubber composition. Subsequently, the rubber composition that is in an unvulcanized state is processed into pad rubber, which is adhered and molded on a tire molding machine in an ordinary method, so as to mold a green tire. The green tire is heated under pressure in a vulcanizing machine to provide a tire including pad rubber produced from the tire rubber composition of the present invention.

Examples

<Examples 1, 3 to 7, 9, and 12 to 15 and Comparative Examples 1 to 10>

[Preparation of Rubber Composition]

The components were kneaded in the formulation shown in Table 1 to prepare a rubber composition. The details of the components shown in Tables 1 and 2 are as follows. Examples 2, 8, 10, 11, 16, and 17 are estimated values in the case where the components are kneaded in the formulations.

1. Rubber Component (A)

NR: natural rubber, TSR20

2. Compound (B)

Formula (I) compound 1: 2,6-dihydroxybenzohydrazide (compound represented by the formula (I-4))
Formula (I) compound 2: 4-amino-2-hydroxybenzohydrazide (compound represented by the formula (I-5))
Formula (I) compound 3: 3,5-dihydroxynaphthalene-2-carbohydrazide (compound represented by the formula (I-6))

Comparative Compound (B)

Formula (I) with one polar group: 3-hydroxy-2-naphthoic acid hydrazide, produced by Tokyo Kasei Kogyo Co., Ltd. (compound represented by the following formula (B-101))

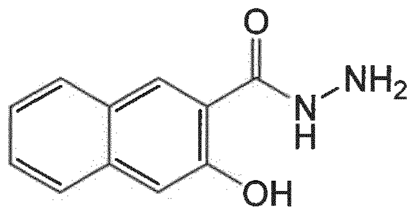

(B-101)

3. Vulcanization Accelerator (C)

Vulcanization accelerator TOT: tetrakis(2-ethylhexyl)thiuram disulfide (thiuram-based vulcanization accelerator, "Nocceler TOT-N", trade name, produced by Ouchi Shinko Chemical Industrial Co., Ltd.)
Vulcanization accelerator NS: N-(tert-butyl)-2-benzothiazolyl sulfenamide (sulfenamide-based vulcanization accelerator, "Sanceler NS-G", trade name, produced by Sanshin Chemical Industry Co., Ltd.)
Vulcanization accelerator MBTS: di-2-benzothiazolyl disulfide (thiazol vulcanization accelerator, "Nocceler DM-P(DM)", trade name, produced by Ouchi Shinko Chemical Industrial Co., Ltd.)

4. Filler (D)

Carbon black: "ASAHI #105", trade name, produced by Asahi Carbon Co., Ltd.
Silica: "Nipsil AQ", trade name, produced by Tosoh Silica Corporation

5. Other Components

Sulfur: "Powdered Sulfur", trade name, produced by Tsurumi Chemical Industry Co., Ltd.

Stearic acid: "Palmac 1600", trade name, produced by Ioi Acidchem Sdn Bhd
Wax: microcrystalline wax, "Ozoace 0701", trade name, produced by Nippon Seiro Co., Ltd.
Antiaging agent: N-phenyl-N'-(1,3-dimethylbutyl)-p-phenylene diamine, "Nocrac 6C", trade name, produced by Ouchi Shinko Chemical Industrial Co., Ltd.
Zinc oxide: "Zinc Oxide #3", trade name, produced by Hakusui Tech Co., Ltd.
Hydrazide compound: 3-hydroxy-N'-(1,3-dimethylbutylidene)-2-naphthoic acid hydrazide

[Evaluation of Rubber Composition]

1. Evaluation of Low Heat Generation Property

A rubber test piece obtained by vulcanizing each of the rubber compositions was measured for tanδ with a viscoelasticity measuring device (produced by Rheometric Scientific, Inc.) at a temperature of 50°C, a strain of 3%, and a frequency of 15 Hz. The results were shown as indices according to the following expression assuming that tanδ of Comparative Example 2 was 100. A smaller heat generation index shows a better low heat generation property and a smaller hysteresis loss.

$$\text{heat generation index} = (\tan\delta \text{ of vulcanized rubber}/ \tan\delta \text{ of vulcanized rubber of Comparative Example 2}) \times 100$$

2. Evaluation of Crack Resistance

A rubber test piece obtained by vulcanizing each of the rubber compositions was punched into a dumbbell shape, and a precrack of 1 mm was formed at the center thereof to prepare a specimen, to which strokes of 5 Hz were applied with a constant stress at 80°C and a chuck distance of 50 mm with a fatigue tester, and the common logarithm of the number of strokes by the complete breakage was shown as an index assuming that Comparative Example 2 was 100.
A larger index shows a better crack propagation resistance.

$$\text{crack resistance index} = ((\text{common logarithm of crack breaking stroke number of vulcanized rubber})/(\text{common logarithm of crack breaking stroke number of vulcanized rubber of Comparative Example 2}) \times 100$$

3. Evaluation of Balance between Low Heat Generation Property and Crack Resistance

The balance index was calculated from the heat generation index and the crack resistance index according to the following expression.

$$\text{balance index} = ((100-\text{heat generation index}) + (\text{crack resistance index}-100))/2$$

A larger balance index shows a better balance between the low heat generation property and the crack resistance of the test tire.

Table 1

| | | Comparative Example | | | | | | | | | | Example | | |
|---|---|---|---|---|---|---|---|---|---|---|---|---|---|---|
| | | 1 | 2 | 3 | 4 | 5 | 6 | 7 | 8 | 9 | 10 | 1 | 2 | 3 |
| Formulation | NR | 100 | 100 | 100 | 100 | 100 | 100 | 100 | 100 | 100 | 100 | 100 | 100 | 100 |
| | Carbon black | 40 | 30 | 30 | 30 | 30 | 40 | 30 | 30 | 40 | 40 | 40 | 40 | 35 |
| | Silica | 0 | 10 | 10 | 10 | 10 | 0 | 10 | 10 | 0 | 0 | 0 | 0 | 5 |
| | Sulfur | 1.5 | 1.5 | 1.5 | 1.5 | 1.5 | 1.5 | 1.5 | 1.5 | 1.5 | 1.5 | 1.5 | 1.5 | 1.5 |
| | Stearic acid | 2 | 2 | 2 | 2 | 2 | 2 | 2 | 2 | 2 | 2 | 2 | 2 | 2 |
| | Wax | 2 | 2 | 2 | 2 | 2 | 2 | 2 | 2 | 2 | 2 | 2 | 2 | 2 |
| | Antiaging agent | 1 | 1 | 1 | 1 | 1 | 1 | 1 | 1 | 1 | 1 | 1 | 1 | 1 |
| | Zinc oxide | 3 | 3 | 3 | 3 | 3 | 3 | 3 | 3 | 3 | 3 | 3 | 3 | 3 |
| | Vulcanization accelerator TOT | 0 | 0 | 0.5 | 0 | 0.5 | 0.5 | 0.5 | 0.5 | 0.5 | 0 | 0.5 | 0.5 | 0.5 |
| | Vulcanization accelerator NS | 1 | 1 | 1 | 1 | 0 | 1 | 1 | 1 | 1 | 1 | 1 | 1 | 1 |
| | Formula (I) compound 1 | 0 | 0 | 0 | 0.3 | 0.3 | 0 | 0 | 0 | 0 | 0.3 | 0.3 | 1 | 0.3 |
| | Hydrazide compound | 0 | 0 | 0 | 0 | 0 | 0.3 | 0.3 | 0 | 0 | 0 | 0 | 0 | 0 |
| | Formula (I) with one polar group | 0 | 0 | 0 | 0 | 0 | 0 | 0 | 0.3 | 0 | 0 | 0 | 0 | 0 |
| Evaluation | Low heat generation property | 107 | 100 | 99 | 95 | 106 | 102 | 98 | 98 | 105 | 102 | 97 | 93 | 92 |
| | Crack resistance | 104 | 100 | 102 | 98 | 91 | 106 | 103 | 102 | 105 | 102 | 112 | 114 | 110 |
| | Balance between low heat generation property and crack resistance | -1.5 | 0 | 1.5 | 1.5 | -7.5 | 2 | 2.5 | 2 | 0 | 0 | 7.5 | 10.5 | 9 |

Table 2

| | | Example | | | | | | | | | | | | | |
|---|---|---|---|---|---|---|---|---|---|---|---|---|---|---|---|
| | | 4 | 5 | 6 | 7 | 8 | 9 | 10 | 11 | 12 | 13 | 14 | 15 | 16 | 17 |
| Formulation | NR | 100 | 100 | 100 | 100 | 100 | 100 | 100 | 100 | 100 | 100 | 100 | 100 | 100 | 100 |
| | Carbon black | 30 | 30 | 30 | 30 | 30 | 30 | 30 | 30 | 20 | 10 | 0 | 30 | 30 | 30 |
| | Silica | 10 | 10 | 10 | 10 | 10 | 10 | 10 | 10 | 20 | 30 | 40 | 10 | 10 | 10 |
| | Sulfur | 1.5 | 1.5 | 1.5 | 1.5 | 1.5 | 1.5 | 1.5 | 1.5 | 1.5 | 1.5 | 1.5 | 1.5 | 1.5 | 1.5 |
| | Stearic acid | 2 | 2 | 2 | 2 | 2 | 2 | 2 | 2 | 2 | 2 | 2 | 2 | 2 | 2 |
| | Wax | 2 | 2 | 2 | 2 | 2 | 2 | 2 | 2 | 2 | 2 | 2 | 2 | 2 | 2 |
| | Antiaging agent | 1 | 1 | 1 | 1 | 1 | 1 | 1 | 1 | 1 | 1 | 1 | 1 | 1 | 1 |
| | Zinc oxide | 3 | 3 | 3 | 3 | 3 | 3 | 3 | 3 | 3 | 3 | 3 | 3 | 3 | 3 |
| | Vulcanization accelerator TOT | 0.2 | 0.5 | 1 | 1.5 | 0.5 | 0.5 | 0.5 | 0.5 | 0.5 | 0.5 | 0.5 | 0.5 | 0.5 | 0.5 |
| | Vulcanization accelerator NS | 1 | 1 | 1 | 1 | 1 | 1 | 1 | 1 | 1 | 1 | 1 | 0 | 1 | 1 |
| | Vulcanization accelerator MBTS | 0 | 0 | 0 | 0 | 0 | 0 | 0 | 0 | 0 | 0 | 0 | 1 | 0 | 0 |
| | Formula (I) compound 1 | 0.3 | 0.3 | 0.3 | 0.3 | 0.05 | 0.1 | 1 | 2.3 | 0.3 | 0.3 | 0.3 | 0.3 | 0 | 0 |
| | Formula (I) compound 2 | 0 | 0 | 0 | 0 | 0 | 0 | 0 | 0 | 0 | 0 | 0 | 0 | 0.3 | 0 |
| | Formula (I) compound 3 | 0 | 0 | 0 | 0 | 0 | 0 | 0 | 0 | 0 | 0 | 0 | 0 | 0 | 0.3 |
| Evaluation | Low heat generation property | 88 | 87 | 86 | 86 | 95 | 94 | 85 | 84 | 75 | 72 | 70 | 90 | 96 | 89 |
| | Crack resistance | 103 | 105 | 111 | 113 | 103 | 104 | 110 | 111 | 101 | 92 | 85 | 99 | 108 | 102 |
| | Balance between low heat generation property and crack resistance | 7.5 | 9 | 12.5 | 13.5 | 4 | 5 | 12.5 | 13.5 | 13 | 10 | 7.5 | 4.5 | 6 | 6.5 |

It is understood from Tables 1 and 2 that the tires obtained from the rubber compositions of Comparative Examples 1 to 3 and 6 to 9, which do not contain the compound (B), the rubber compositions of Comparative Examples 4 and 10, which contain the compound (B) but do not contain the thiuram-based vulcanization accelerator, and the rubber composition of Comparative Example 5, which contains the compound (B) and the thiuram-based vulcanization accelerator but does not use two or more kinds of vulcanization accelerators, are not excellent in balance between the low heat generation property and the crack resistance.

On the other hand, it is also understood therefrom that the tires obtained from the rubber compositions of Examples, which contain the rubber component (A), the compound (B), the vulcanization accelerator (C) containing two or more kinds of vulcanization accelerators including a thiuram-based vulcanization accelerator, and the filler (D), are excellent in balance between the low heat generation property and the crack resistance.

Industrial Applicability

The tire rubber composition of the present invention is capable of producing a tire that is excellent in balance between the low heat generation property and the crack resistance, and therefore is suitable for the production of a heavy load tire for trucks, buses, and the like, and is particularly suitable for the production of a heavy load tire for off-the-road. The tire rubber composition of the present invention is suitable for pad rubber in the vicinity of the carcass ply cord, which often causes stress and heat generation due to the upthrust force from the rim flange.

Reference Sign List

1: Tire
2: Tread
3: Side wall
4: Bead
5: Carcass
5a: Folded carcass
6: Belt
7: Rim
8: Stiffener
9a: Pad rubber
9b: Pad rubber

**Claims**

**1.** A tire rubber composition comprising

a rubber component (A),
at least one compound (B) selected from the group consisting of a compound represented by the following formula (I) and a compound represented by the following formula (II),
a vulcanization accelerator (C) containing two or more kinds of vulcanization accelerators including a thiuram-based vulcanization accelerator, and
a filler (D):

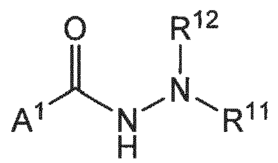

(I)

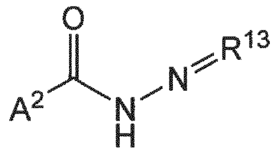

(II)

wherein

in the formula (I), $A^1$ represents an aryl group having at least two polar groups, in which the polar groups may be the same as or different from each other, and $R^{11}$ and $R^{12}$ each independently represent a hydrogen atom, an acyl group, an amide group, an alkyl group, a cycloalkyl group, or an aryl group, and
in the formula (II), $A^2$ represents an aryl group having 6 to 15 carbon atoms having at least two polar groups, in which the polar groups may be the same as or different from each other, and $R^{13}$ represents a divalent saturated or unsaturated aliphatic group having 1 to 30 carbon atoms, a cycloalkylene group having 5 to 10 carbon atoms, or an arylene group having 5 to 10 carbon atoms.

**2.** The tire rubber composition according to claim 1, wherein at least one of the polar groups of $A^1$ and at least one of the polar groups of $A^2$ each independently are a hydroxy group, an amino group, or a nitro group.

**3.** The tire rubber composition according to claim 1 or 2, wherein at least one of the polar groups of $A^1$ and at least one of the polar groups of $A^2$ each are a hydroxy group.

**4.** The tire rubber composition according to any one of claims 1 to 3, wherein at least two of the polar groups of $A^1$ and at least two of the polar groups of $A^2$ each are hydroxy groups.

**5.** The tire rubber composition according to any one of claims 1 to 4, wherein $A^1$ and $A^2$ each independently represent a phenyl group or a naphthyl group.

**6.** The tire rubber composition according to any one of claims 1 to 5, wherein $R^{11}$ and $R^{12}$ all represent hydrogen atoms.

**7.** The tire rubber composition according to any one of claims 1 to 6, wherein the compound (B) has a molecular weight of 200 or less.

**8.** The tire rubber composition according to any one of claims 1 to 7, wherein the compound (B) has a melting point of 80°C or more and less than 250°C.

**9.** The tire rubber composition according to any one of claims 1 to 8, wherein the tire rubber composition has a content of the compound (B) of 0.1 part by mass or more and 2 parts by mass or less per 100 parts by mass of the rubber component (A).

**10.** The tire rubber composition according to any one of claims 1 to 9, wherein the vulcanization accelerator (C) contains a sulfenamide-based vulcanization accelerator.

**11.** The tire rubber composition according to any one of claims 1 to 10, wherein the filler (D) contains at least one selected from the group consisting of carbon black and silica.

**12.** The tire rubber composition according to any one of claims 1 to 11, wherein the tire rubber composition has a content of the thiuram-based vulcanization accelerator of 2.0 parts by mass or less per 100 parts by mass of the rubber component (A).

**13.** The tire rubber composition according to any one of claims 1 to 12, wherein the filler (D) contains silica, and the tire rubber composition has a content of the silica of 20 parts by mass or less per 100 parts by mass of the rubber component (A).

**14.** A tire, which is produced from the tire rubber composition according to any one of claims 1 to 13.

**15.** The tire according to claim 14, wherein the tire comprises pad rubber produced from the tire rubber composition according to any one of claims 1 to 13.

**Patentansprüche**

1. Reifengummizusammensetzung, umfassend

eine Gummikomponente (A),
mindestens eine Verbindung (B), die aus der Gruppe ausgewählt ist, bestehend aus einer Verbindung, die durch die folgende Formel (I) dargestellt ist, und einer Verbindung, die durch die folgende Formel (II) dargestellt ist,
einen Vulkanisierungsbeschleuniger (C), der zwei oder mehr Arten von Vulkanisierungsbeschleunigern, einschließlich eines Thiuram-basierten Vulkanisierungsbeschleunigers, enthält, und
einen Füllstoff (D):

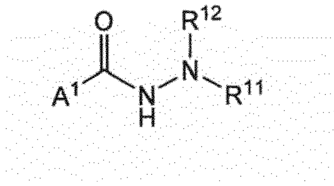
(I)

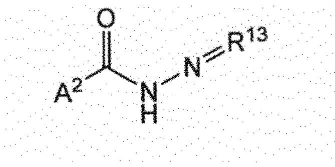
(II)

wobei
in der Formel (I), $A^1$ eine Arylgruppe darstellt, die mindestens zwei polare Gruppen aufweist, wobei die polaren Gruppen gleich oder voneinander verschieden sein können, und $R^{11}$ und $R^{12}$ jeweils unabhängig ein Wasserstoffatom, eine Acylgruppe, eine Amidgruppe, eine Alkylgruppe, eine Cycloalkylgruppe oder eine Arylgruppe darstellen, und
in der Formel (II), $A^2$ eine Arylgruppe darstellt, die 6 bis 15 Kohlenstoffatome aufweist, die mindestens zwei polare Gruppen aufweisen, wobei die polaren Gruppen gleich oder voneinander verschieden sein können, und $R^{13}$ eine zweiwertige gesättigte oder ungesättigte aliphatische Gruppe, die 1 bis 30 Kohlenstoffatome aufweist, eine Cycloalkylengruppe, die 5 bis 10 Kohlenstoffatome aufweist, oder eine Arylengruppe, die 5 bis 10 Kohlenstoffatome aufweist, darstellt.

2. Reifengummizusammensetzung nach Anspruch 1, wobei mindestens eine der polaren Gruppen von $A^1$ und mindestens eine der polaren Gruppen von $A^2$ jeweils unabhängig eine Hydroxygruppe, eine Aminogruppe oder eine Nitrogruppe sind.

3. Reifengummizusammensetzung nach Anspruch 1 oder 2, wobei mindestens eine der polaren Gruppen von $A^1$ und mindestens eine der polaren Gruppen von $A^2$ jeweils eine Hydroxygruppe sind.

4. Reifengummizusammensetzung nach einem der Ansprüche 1 bis 3, wobei mindestens zwei der polaren Gruppen von $A^1$ und mindestens zwei der polaren Gruppen von $A^2$ jeweils Hydroxygruppen sind.

5. Reifengummizusammensetzung nach einem der Ansprüche 1 bis 4, wobei $A^1$ und $A^2$ jeweils unabhängig eine Phenylgruppe oder eine Naphthylgruppe darstellen.

6. Reifengummizusammensetzung nach einem der Ansprüche 1 bis 5, wobei $R^{11}$ und $R^{12}$ beide Wasserstoffatome darstellen.

7. Reifengummizusammensetzung nach einem der Ansprüche 1 bis 6, wobei die Verbindung (B) ein Molekulargewicht von 200 oder weniger aufweist.

8. Reifengummizusammensetzung nach einem der Ansprüche 1 bis 7, wobei die Verbindung (B) einen Schmelzpunkt von 80 °C oder mehr und weniger als 250 °C aufweist.

**9.** Reifengummizusammensetzung nach einem der Ansprüche 1 bis 8, wobei die Reifengummizusammensetzung einen Gehalt der Verbindung (B) von 0,1 Massenteilen oder mehr und 2 Massenteilen oder weniger auf 100 Massenteile der Gummikomponente (A) aufweist.

**10.** Reifengummizusammensetzung nach einem der Ansprüche 1 bis 9, wobei der Vulkanisierungsbeschleuniger (C) einen Sulfenamid-basierten Vulkanisierungsbeschleuniger enthält.

**11.** Reifengummizusammensetzung nach einem der Ansprüche 1 bis 10, wobei der Füllstoff (D) mindestens eines enthält, das aus der Gruppe ausgewählt ist, bestehend aus Rußschwarz und Siliciumdioxid.

**12.** Reifengummizusammensetzung nach einem der Ansprüche 1 bis 11, wobei
die Reifengummizusammensetzung einen Gehalt des Thiuram-basierten Vulkanisierungsbeschleunigers von 2,0 Massenteilen oder weniger auf 100 Massenteile der Gummikomponente (A) aufweist.

**13.** Reifengummizusammensetzung nach einem der Ansprüche 1 bis 12, wobei der Füllstoff (D) Siliciumdioxid enthält und die Reifengummizusammensetzung einen Siliciumdioxidgehalt von 20 Massenteilen oder weniger auf 100 Massenteile der Gummikomponente (A) aufweist.

**14.** Reifen, der aus der Reifengummizusammensetzung nach einem der Ansprüche 1 bis 13 hergestellt ist.

**15.** Reifen nach Anspruch 14, wobei der Reifen ein Polstergummi umfasst, das aus der Reifengummizusammensetzung nach einem der Ansprüche 1 bis 13 hergestellt ist.

## Revendications

**1.** Composition de caoutchouc pour pneu comprenant

un composant de caoutchouc (A),
au moins un composé (B) choisi dans le groupe constitué d'un composé représenté par la formule (I) suivante et d'un composé représenté par la formule (II) suivante,
un accélérateur de vulcanisation (C) contenant deux types ou plus d'accélérateurs de vulcanisation incluant un accélérateur de vulcanisation à base de thiurame, et
une charge (D) :

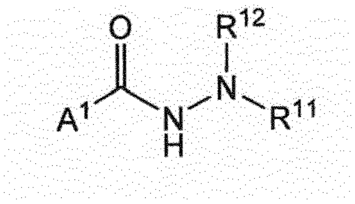

(I)

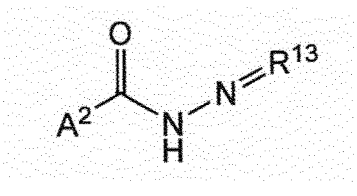

(II)

dans laquelle
dans la formule (I), $A^1$ représente un groupe aryle ayant au moins deux groupes polaires, dans laquelle les groupes polaires peuvent être identiques ou différents les uns par rapport aux autres, et $R^{11}$ et $R^{12}$ représentent chacun indépendamment un atome d'hydrogène, un groupe acyle, un groupe amide, un groupe alkyle, un groupe cycloalkyle, ou un groupe aryle, et
dans la formule (II), $A^2$ représente un groupe aryle ayant 6 à 15 atomes de carbone ayant au moins deux groupes polaires, dans laquelle les groupes polaires peuvent être identiques ou différents les uns par rapport

aux autres, et $R^{13}$ représente un groupe aliphatique saturé ou insaturé divalent ayant 1 à 30 atomes de carbone, un groupe cycloalkylène ayant 5 à 10 atomes de carbone, ou un groupe arylène ayant 5 à 10 atomes de carbone.

**2.** Composition de caoutchouc pour pneu selon la revendication 1, dans laquelle au moins un des groupes polaires de $A^1$ et au moins un des groupes polaires de $A^2$ sont chacun indépendamment un groupe hydroxy, un groupe amino, ou un groupe nitro.

**3.** Composition de caoutchouc pour pneu selon la revendication 1 ou 2, dans laquelle au moins un des groupes polaires de $A^1$ et au moins un des groupes polaires de $A^2$ sont chacun un groupe hydroxy.

**4.** Composition de caoutchouc pour pneu selon l'une quelconque des revendications 1 à 3, dans laquelle au moins deux des groupes polaires de $A^1$ et au moins deux des groupes polaires de $A^2$ sont chacun des groupes hydroxy.

**5.** Composition de caoutchouc pour pneu selon l'une quelconque des revendications 1 à 4, dans laquelle $A^1$ et $A^2$ représentent chacun indépendamment un groupe phényle ou un groupe naphtyle.

**6.** Composition de caoutchouc pour pneu selon l'une quelconque des revendications 1 à 5, dans laquelle $R^{11}$ et $R^{12}$ représentent tous des atomes d'hydrogène.

**7.** Composition de caoutchouc pour pneu selon l'une quelconque des revendications 1 à 6, dans laquelle le composé (B) a une masse moléculaire de 200 ou moins.

**8.** Composition de caoutchouc pour pneu selon l'une quelconque des revendications 1 à 7, dans laquelle le composé (B) a un point de fusion de 80 °C ou plus et inférieur à 250 °C.

**9.** Composition de caoutchouc pour pneu selon l'une quelconque des revendications 1 à 8, dans laquelle la composition de caoutchouc pour pneu a une teneur du composé (B) de 0,1 partie en masse ou plus et de 2 parties en masse ou moins pour 100 parties en masse du composant de caoutchouc (A).

**10.** Composition de caoutchouc pour pneu selon l'une quelconque des revendications 1 à 9, dans laquelle l'accélérateur de vulcanisation (C) contient un accélérateur de vulcanisation à base de sulfénamide.

**11.** Composition de caoutchouc pour pneu selon l'une quelconque des revendications 1 à 10, dans laquelle la charge (D) contient au moins un choisi dans le groupe constitué de noir de carbone et silice.

**12.** Composition de caoutchouc pour pneu selon l'une quelconque des revendications 1 à 11, dans laquelle
la composition de caoutchouc pour pneu a une teneur de l'accélérateur de vulcanisation à base de thiurame de 2,0 parties en masse ou moins pour 100 parties en masse du composant de caoutchouc (A).

**13.** Composition de caoutchouc pour pneu selon l'une quelconque des revendications 1 à 12, dans laquelle la charge (D) contient de la silice, et la composition de caoutchouc pour pneu a une teneur de la silice de 20 parties en masse ou moins pour 100 parties en masse du composant de caoutchouc (A).

**14.** Pneu, qui est produit à partir de la composition de caoutchouc pour pneu selon l'une quelconque des revendications 1 à 13.

**15.** Pneu selon la revendication 14, dans lequel le pneu comprend du caoutchouc de patin produit à partir de la composition de caoutchouc pour pneu selon l'une quelconque des revendications 1 à 13.

[Fig. 1]

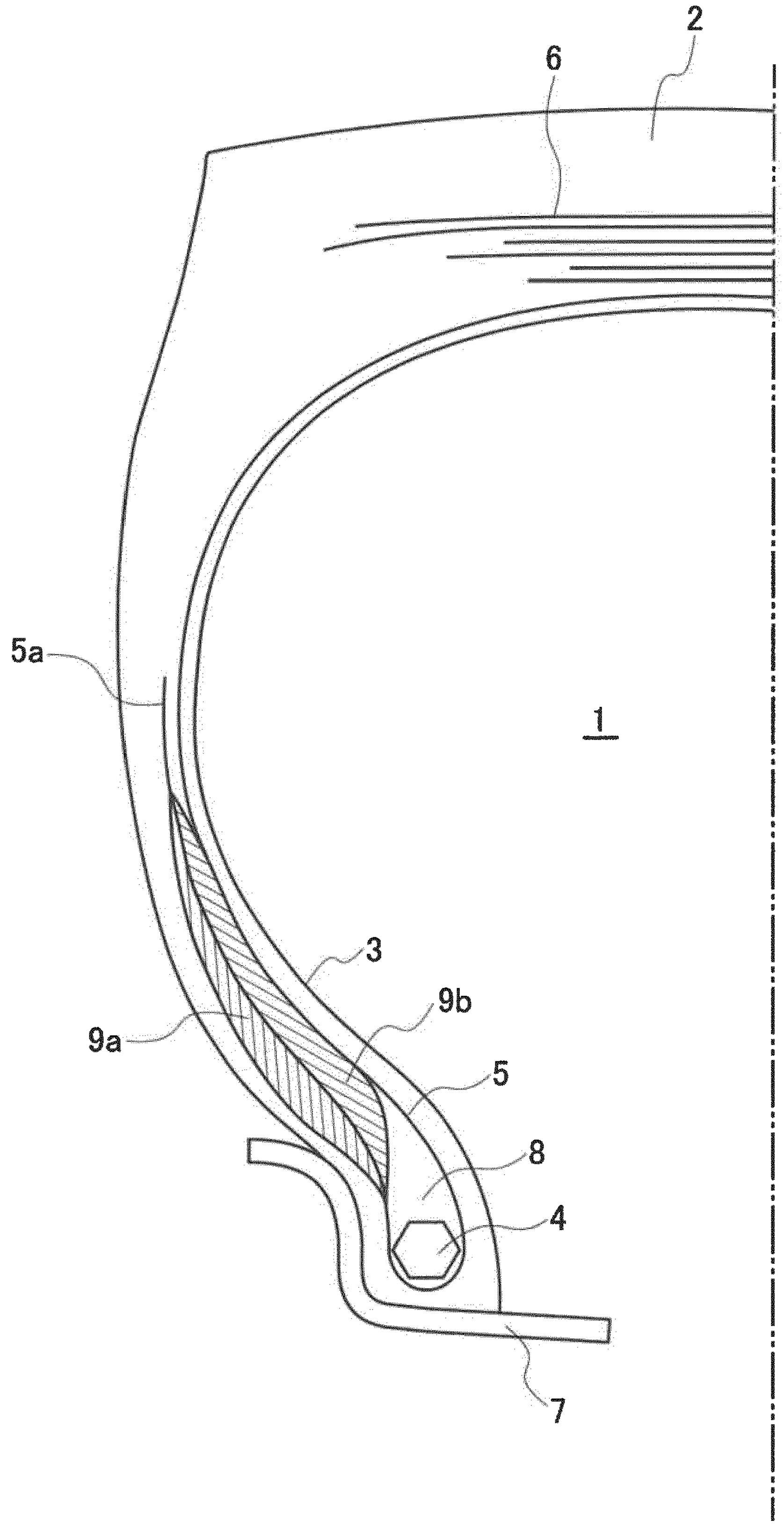

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005225909 A
- JP 2014062259 A